# EUROPEAN PATENT APPLICATION

(11) **EP 1 397 014 A1**
(43) Date of publication of application: **10.03.2004**
(21) Application number: 02292180.3
(22) Date of filing: 04.09.2002
(51) Int. Cl.: H04Q 7/32, H04L 9/32, G07F 7/10

(54) **WIM (WAP Identification module) Primitives for handling the secure socket layer protocol (SSL)**

(71) Applicant: SCHLUMBERGER Systèmes, 92120 Montrouge (FR)
(72) Inventor: Mahalal, Ilan, c/o Schlumberger Systèmes, 92542 Montrouge Cedex (FR)

(57) **Abstract**

The invention is a method for calculating hashing of a message in a device communicating with a smart card, said device and said smart card storing the same hash function, the message comprising data blocks including secret data and other data, secret data being only known by the smart card, characterized in that the calculation of the hash of the secret data is performed in the smart card and the calculation of the hash of all or part of the other data is performed in the device, and in that, the intermediate result is transmitted from the device to the card, or inversely, depending on whether the hash calculation of the hash of a data has to be performed by the smart card or the device.

## Description

### 1 Field of the invention

The Wireless Application Protocol (WAP) defines an industry-wide specification for developing applications that operate over wireless communication networks. The scope for the WAP Forum is to define a set of specifications to be used by service applications. The wireless market is growing very quickly, and reaching new customers and services. To enable operators and manufacturers to meet the challenges in advanced services, differentiation and fast/flexible service creation WAP Forum defines a set of protocols in transport, security, transaction, session and application layers.
The Security layer protocols in the WAP architecture can be the Wireless Transport Layer Security (WTLS) or the standard Transport Layer Security (TLS) Internet protocol. WTLS provides functionality similar to TLS 1.0 but is more adapted to lower bandwidth communication channels. TLS and WTLS layer operate above the transport protocol layer. They provide the upper-level Layer of WAP with a secure transport service interface and also provide an interface for managing (eg, creating and terminating) secure connections. The primary goal of the WTLS or TLS layers is to provide privacy, data integrity and authentication between two communicating applications.

For optimum security, some parts of the security functionality need to be performed by a tamper-resistant device, so that an attacker cannot retrieve sensitive data. Such data is especially the permanent private keys used in the WTLS or TLS handshakes with client authentication, and for making application level electronic signatures (such as confirming an application level transaction). In WTLS, also the master secrets, protecting secure sessions are relatively long living - which could be several days. This is in order to avoid frequent full handshakes which are relatively heavy both computationally and due to large data transfer. Master secrets are also used as a source of entropy, to calculate MAC keys and message encryption keys, which are used to secure a limited number of messages, depending on usage of WTLS or TLS.
The WAP Identity Module (WIM) is used in performing WTLS, TLS and application level security functions, and especially, to store and process information needed for user identification and authentication. The WIM stores the client sensitive data, especially keys and sessions master secrets. All operations where keys and master secrets are involved are performed internally in the WIM. An example of a WIM implementation is a smart card. In the phone, it can be the Subscriber Identity Module (SIM) card or an external smart card.

### 2 Prior Art

The WIM (WAP Identity Module) is a security token standardized in the WAP Forum. As mentioned above, the WAP Forum WIM specification describes how the WIM is used with TLS and WTLS and in application level services. The WIM specification does not specify service primitive for SSL (Secure Socket Layer), which is another type of Transport Layer Security protocol. In fact, TLS is derived from SSL and the protocols are quite similar, but some differences exist. This invention deals with adding an efficient support in the WIM for SSL.

### 3 What problem needs to be solved?

In WTLS and TLS the Mobile Equipment (ME) sends to the server a message called "Finished" message, which is always sent at the end of the handshake to verify that the key exchange and authentication processes were successful.

The Mobile Equipment (ME) uses the WIM for calculating the data to send in the "Finished" message and also the data that should be received from the server. In order to do that it issues the "Client Finished Check" and "Server Finished Check" commands to the WIM. Using the PRF (Pseudo Random Function), the WIM calculates a requested number of bytes based on the session master secret, and a seed value received from the ME. The WIM then returns the bytes to be used by the ME in the "Finished" message. For calculating the Client Finished Check data the ME uses the WIM-PHash primitive with the following input data parameter: "client finished" + Hash(handshake_messages). The primitive then returns the needed data block.

For Calculating the server finished check the ME uses the WIM-PHash primitive with the following input data parameter: "server finished" + Hash(handshake_messages). The primitive then returns the needed data block.

The "Hash(handshake_messages)" is defined as the SHA-1 and/or MD5 hash (depending on protocol) of the concatenation of all previous handshake messages that were exchanged up to but not including the "Finished" message.

In SSL the parameters that are sent to the WIM for the "Finished" message are a bit different. When we perform the finished check in SSL, it is necessary to perform a hash on **'handshake_messages + Sender + master_secret + pad1'.** Comparing with WTLS and TLS we see that the Hash should be calculated also over the session "master secret" in addition to "handshake_messages". This poses a problem since the ME does not know the value of the master secret as it is securely stored in the WIM and is never exposed externally. If the ME could compute the hash over 'handshake_messages' in WTLS and TLS and then send it as a parameter to the WIM-PHash primitive, it is now unable to calculate the corresponding parameter in SSL. One simple solution is to first store the "handshake_messages" data block in the WIM and then ask it to calculate the Hash by internally adding the master secret to the data block before computing the hash. This solution has several drawbacks:
- The "handshake_messages" data block is rather large and a big storage area should be allocated in the WIM
- It is time consuming to send all the "handshake_messages" data to store in the WIM
- It is time consuming to calculate the Hash in the WIM since the ME can usually do it faster as it has a stronger processor

The above drawbacks call for a different solution, which is described in this invention. This invention defines a solution for calculating the "Finished" message by the WIM module for SSL in an efficient manner and without the need to send the whole "handshake_messages" data block to store in the WIM.

### 4 Invention

The invention is a method for calculating hashing of a message in a device communicating with a smart card, said device and said smart card storing the same hash function, the message comprising data blocks including secret data and other data, secret data being only known by the smart card, characterized in that the calculation of the hash of the secret data is performed in the smart card and the calculation of the hash of all or part of the other data is performed in the device, and in that, the intermediate result is transmitted from the device to the card, or inversely, depending on whether the hash calculation of the hash of a data has to be performed by the smart card or the device.

### 5 Detailed Description of Examples Illustrating the Invention

In order to simplify the description, the same elements illustrated in the drawings have the same references.

Fig. 1 represents an example of a data processing system S in which the invention may be applied.
Figures 2-4 are views of a message including secret data.

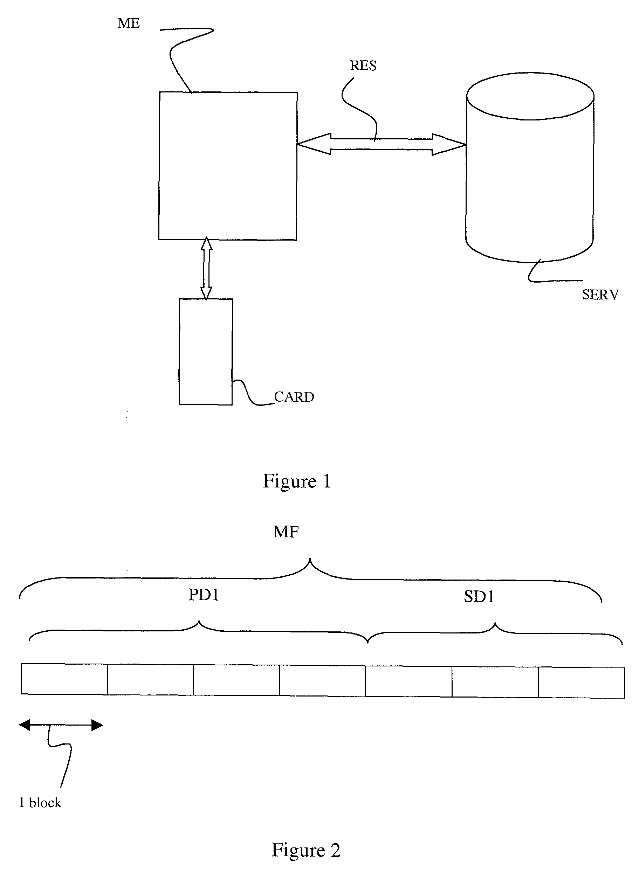

Figure 1 represents a system S. In our example, This system includes a smart card CAR coupled to a device ME communicating with a server SERV through a network RES.

In order to avoid the drawbacks that were described before we can leverage on the characteristics of the Hash function. This function works on a fixed length of data input and the result is carried on to the next iteration. It calculate a hash on the first block of the data (64 bytes for SHA-1), then carry the result to the calculation of the Hash on the second block and continue like that until all input data is consumed. In our case the input data is:
'handshake_messages + Sender + master_secret + pad1', where the "+" operator means concatenation.

The ME can start calculating the hash over the "handshake_messages" which is the biggest data block. It then send the intermediate result and the remaining data in the last data block, to the WIM and the WIM continue the hash calculation internally by using the intermediate result, remaining data in the last data block and the additional data that is kept internally (e.g. "master_secret").

The main advantage of the above solution is speed. It will take more time to write the whole data in a file in the WIM and then have the WIM read it and hash it. Speed is very important in the handshake and it is very important to optimize it. If it takes more than a few seconds to establish a secure session it is not very convenient for the user. The other advantage is to avoid the need to store quite a big block of data in the WIM for this specific primitive.

This invention also formalizes the way by which the intermediate results are sent to the WIM in order to use the same convention of command exchanged between the ME and the WIM for other primitives. The ME wiii send the hash intermediate result and other data if needed with the WIM MSE-Set command. These parameters will be put in a newly defined "SSL security environment" in the WIM. The SSL security environment will implement acceptance of these parameters via the MSE-set command, which should be called before invoking the PSO command for calculating the "Finished" message. This is natural, easy to implement and fit well the WIM specification approach.

The invention is a method for implementing support in the WIM for calculating the "Finished" message in SSL where the ME start calculating the hash over the "handshake_messages" and then send the intermediate result to the WIM that continue the hash calculation internally by using the intermediate result and the additional data that is kept internally (e.g. "master_secret")

Advantageously, where the intermediate result of the hash calculation done by the ME is sent to the WIM by using the WIM MSE-Set command that set the value in a relevant placeholder in an SSL Security Environment in WIM.

Generally, the invention is a method for calculating hashing of a message (FM) in a device communicating with a smart card, said device and said smart card storing the same hash function, the message comprising data blocks including secret data (SD1) and other data (PD1), secret data (SD1) being only known by the smart card, characterized in that the calculation of the hash of the secret data (SD1) is performed in the smart card and the calculation of the hash of all or part of the other data (PD1) is performed in the device, and in that, the intermediate result (R) is transmitted from the device to the card, or inversely, depending on whether the hash calculation of the hash of a data has to be performed by the smart card or the device.

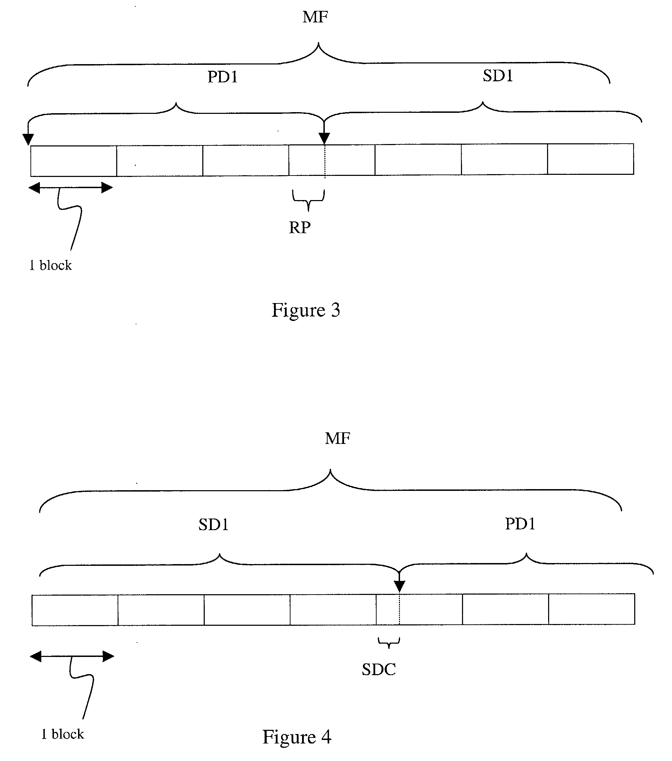

If data (SD1) is followed by the other data (PD1) in the message (see figure 4), the smart card starts calculating the hash of all blocks that include a secret data (SD1) and then sends the corresponding intermediate result (R) to the (ME) that continue the hash calculation by using the intermediate result (R) and the remaining data (PD1). For example, the data SDC including secret data is hashed in the smartcard.

On the contrary, if data (PD1) is followed by the other data (SD1) (see figure 3), the (ME) starts calculating the hash of (PD1) and then send the corresponding intermediate result (R) and remaining part RP of last hash block to the smart card that continue to do the hash calculation internally by using the intermediate result (R), last hash block and the remaining data (SD1).
In our example, the device is implementing the Transport Layer Security protocol is SSL (Secure Socket Layer) and the smart card is a WAP Identity Module (WIM). More specifically, the message called "Finished" in the SSL protocol and in that the secret data (SD1) is an SSL session master secret.

## Claims

1. A method for calculating hashing of a message (FM) in a device communicating with a smart card, said device and said smart card storing the same hash function, the message comprising data blocks including secret data (SD1) and other data (PD1), secret data (SD1) being only known by the smart card, **characterized in that** the calculation of the hash of the secret data (SD1) is performed in the smart card and the calculation of the hash of all or part of the other data (PD1) is performed in the device, and **in that**, the intermediate result (R) is transmitted from the device to the card, or inversely, depending on whether the hash calculation of the hash of a data has to be performed by the smart card or the device.

2. The method according to claim 1, **characterized in that**, if data (SD1) is followed by the other data (PD1) in the message (FM), the smart card starts calculating the hash of all blocks that include a secret data (SD1) and then sends the corresponding intermediate result (R) to the (ME) that continue the hash calculation by using the intermediate result (R) and the remaining data (PD1).

3. The method according to claim 2, **characterized in that**, if a block includes a part comprising secret data (SD1) and another part comprising other data (PD1), the smart card calculates the hash of this block.

4. The method according to claim 1, **characterized in that**, if data (PD1) is followed by the other data (SD1), the (ME) starts calculating the hash of (PD1) and then send the corresponding intermediate result (R) and remaining part (RP) of last hash block to the smart card that continue to do the hash calculation internally by using the intermediate result (R), last hash block and the remaining data (SD1).

5. The method according to claim 1, **characterized in that** the device is implementing the Transport Layer Security protocol is SSL (Secure Socket Layer).

6. The method according to claim 5, **characterized in that** the message is a message called "Finished" in the SSL protocol and **in that** the secret data (SD1) is an SSL session master secret.

7. The method according to claim 1, **characterized in that** the smart card is a WAP Identity Module (WIM).
